Europäisches Patentamt

European Patent Office

Office européen des brevets

(11) Veröffentlichungsnummer: **0 295 677**
**A2**

## (12) EUROPÄISCHE PATENTANMELDUNG

(21) Anmeldenummer: **88109647.3**

(22) Anmeldetag: **16.06.88**

(51) Int. Cl.⁴: **D06N 3/14**

(30) Priorität: **17.06.87 DD 303882**

(43) Veröffentlichungstag der Anmeldung:
**21.12.88 Patentblatt 88/51**

(84) Benannte Vertragsstaaten:
**AT DE FR GB IT NL**

(71) Anmelder: **VEB VOGTLÄNDISCHE KUNSTLEDERFABRIEK TANNENBERGSTHAL**
**Klingenthaler Strasse 23**
**DDR-9656 Tannenbergsthal(DD)**

(72) Erfinder: **Olschewski, Max, Dipl.-Chem.**
**Defreggerstr 8 a**
**DDR-1193 Berlin(DD)**
Erfinder: **Becker, Robert, Dr.**
**Kienbergstr 1**
**DDR-1040 Berlin(DD)**
Erfinder: **Helbig, Dietmar, Dipl.-Chem.**
**Hammerbergstr 1**
**DDR-9656 Tannenbergsthal(DD)**
Erfinder: **Meier, Jörg-Uwe, Dipl.-Chem.**
**Bahnhofstr 9**
**DDR-9705 Grünbach(DD)**
Erfinder: **Will, Eckhard**
**Feldstr 20**
**DDR-9704 Falkenstein(DD)**
Erfinder: **Seifert, Horst**
**Irkutsker-Str 65**
**DDR-9044 Karl-Marx-Stadt(DD)**
Erfinder: **Knorr, Klaus, Dipl.-Ing.**
**Heinrich-Heine-Str 12**
**DDR-7113 Markkleeberg(DD)**
Erfinder: **Weigelt, Friedrich, Dipl.-Ing.**
**Breitkopfstr 20**
**DDR-7050 Leipzig(DD)**

(74) Vertreter: **Patentanwälte Beetz sen. - Beetz jun. Timpe - Siegfried - Schmitt-Fumian-Mayr**
**Steinsdorfstrasse 10**
**D-8000 München 22(DE)**

(54) Verfahren zur lösungsmittelfreien Herstellung poröser Polyurethanstrukturen und Verbunde mit Fasern, Fasergebilden und anderen Substraten.

(57) Die Erfindung betrifft ein Verfahren zur lösungsmittelfreien Herstellung poröser Polyurethanstrukturen und Verbunde mit Fasern, Fasergebilden und anderen Substraten.

Beim erfindungsgemäßen Verfahren werden poröse Polyurethanstrukturen und Verbunde mit Fasern, Fasergebilden und anderen Substraten, die eine große aktive Oberfläche und einen hohen Anteil an Mikroporen aufweisen, in der Weise hergestellt, daß man die Katalysatoren für die Polymerbildung gezielt mit

Gelbildungsbeschleunigern bei einem bestimmten Temperaturregime und ausgewählten Polymerbestandteilen kombiniert, so daß eine schockartige Schaumbildung bei gleichzeitigem starken Viskositätsanstieg erreicht wird.

Das Verfahren eignet sich für die Herstellung von Kunstlederprodukten und technischen Erzeugnissen als Bahnenware oder sonstigen Formkörpern.

**Verfahren zur lösungsmittelfreien Herstellung poröser Polyurethanstrukturen und Verbunde mit Fasern, Fasergebilden und anderen Substraten**

Die Erfindung betrifft ein Verfahren zur lösungsmittelfreien Herstellung poröser Polyurethanstrukturen und Verbunde mit Fasern, Fasergebilden und anderen Substraten aus flüssigen, reaktiven Polyurethansystemen durch Einsatz von Wasser oder Wasserdampf als Verfestigungsmedium.

Verfahren zur Herstellung von möglichst weichen und atmungsaktiven Kunstledern aus faserigen Substraten und Polymeren, meistens elastomeren Polyurethanen (PUR), sind bekannt. Der weitaus größte Teil der angewandten Verfahren beruht auf dem Prinzip der Koagulation. Dazu werden entsprechend DE-A1-2 948 892 und JP-56-85 479 z.B. Vliese mit DMF-Lösungen ausreagierter linearer PUR getränkt, abgequetscht und das PUR mit einer Koagulationstechnologie entsprechend US-A-4 341 581 und US-A-4 429 000 durch Austausch des Lösungsmittels gegen Wasser im Gegenstrom zu Koagulationsstrukturen umgewandelt, die einerseits Faserverschlaufungen verkleben und somit das Festigkeitsniveau des Vlieses anheben und andererseits einen gewissen poromeren Charakter aufweisen, von welchem u.a. die trage hygienischen Eigenschaften abhängen. Dabei kann der Auftrag der Lösungen durch Aufsprühen, -walzen, -gießen, -drucken und Pflatschen erfolgen.

Wie in DE-A1-3 143 064 beschrieben, kann im Anschluß an ein solches Verfahren durch mechanische Oberflächenbehandlung eine velourartige Beschaffenheit des Endproduktes erzeugt werden. Anstelle der umweltbelastenden und wegen der Lösungsmittelrückgewinnung aufwendigen PUR-Lösungen können beispielsweise entsprechend der DE-B-2 931 125 auch wäßrige PUR-Dispersionen zum Einsatz kommen. So werden nach DD-A-237 527 poröse Polyurethanstrukturen aus sensibilisierten PUR-Dispersionen durch Koagulation in Wasser bei 94 bis 98 °C erzeugt.

Zur Verbesserung des Porositätsgrades wird in der DE-A1-3 039 146 die Imprägnierung von Wirrfaservliesen mit PUR-Präpolymerlösungen auf der Basis von Toluylendiisocyanat bzw. Diphenylmethandiisocyanat beschrieben, bei deren Härtungsprozeß neben Koagulationsstrukturen durch Reaktion von Isocyanat mit Wasser Poren entstehen. Das gleiche gilt für ein Kunstleder entsprechend US-A-4 429 000, nach der eine Präpolymerlösung auf der Basis von Hexamethylendiisocyanat eingesetzt wird, wobei dessen Vliesfasern vorher zur Erzielung größerer Weichheit mit Silikon behandelt wurden.

Alle diese Verfahren weisen den Mangel auf, daß sie - neben der aufwendigen Lösungsmittelrückgewinnung - nur einen mäßigen Grad an Porosität und damit Tragehygiene der entstehenden Produkte erreichen. Außerdem werden die Substrate verfahrensbedingt zumeist voll durchtränkt und entbehren somit einer differenzierbarn Feinstruktur.

Den aus wäßrigen Polyurethandispersionen gewonnenen Koagulaten mangelt es an der erforderlichen Festigkeit, insbesondere bei Einwirkung von Wasser und ggf. verarbeitungsbedingt zum Einsatz kommenden Lösungsmitteln. Andere Verfahren setzen, wie z.B. in DE-A1-2 748 117 beschrieben, zur Vliesimprägnierung PUR-Zweikomponentenschaumsysteme ein. Hierbei werden zwar umweltbelastende Lösungsmittel vermieden, dafür ist jedoch eine sehr genaue Dosierung erforderlich, und die entstehende Imprägnierschaumstruktur ist ebenfalls nicht über die Vliesstärke differenzierbar und nicht mikroporös.

Weitere Verfahren, wie sie z.B. in den EP-B 80 144 und DE-A1-2 264 258 beschrieben sind, verwenden feste PUR, die in Form von feinkörnigem Material aufgebracht werden und durch Verpressen unter Temperatureinwirkung eine feine punktförmige Verklebung von Vliesfasern ergeben, deren Endstruktur aber lediglich als pseudoporomer bezeichnet werden kann. Um Weichheit und Poromercharakter von Kunstleder zu erhöhen, ist es möglich, die Fasern entsprechend DE-A1-2 917 276 bzw. DE-A1-3 107 008 mit wasserlöslichen Polymeren, wie Polyvinylalkohol, vorzuimprägnieren und die Vliese anschließend mit PUR-Lösungen zu behandeln und durch Koagulation zu verfestigen. Zum Vorimprägnieren können auch entsprechend DE-A1-2 456 071 anstatt des Polyvinylalkohols andere Polymere, wie Stärke, Collagen, Carboxymethylcellulose usw., eingesetzt werden. Dabei werden bei der Koagulation der PUR-Lösung in DMF durch Wasser-DMF-Gemische die Vorimprägnierungsmittel teilweise herausgelöst, und es kommt zu einer zusätzlichen Porenstruktur.

Dergleichen wasserlösliche Inhaltsstoffe können im Sinne von US-A-4 426 421 bzw. JP-B-56-49 285 auch bereits als Bestandteile des Fasermaterials im Vlies oder Gewebe mit vorliegen. Sie werden dann im Anschluß an den Koagulationsprozeß der PUR-Imprägnierung durch heißes Wasser ausgewaschen. Die Herstellung eines porösen Polyurethanmaterials über einem auf mechanischem Wege gewonnenen Schaum mit offenporiger Zellstruktur aus PUR-Lösung in DMF durch Koagulation nach bekanntem Verfahren ist in DD-A-204 255 dargestellt.

US-A-4 353 955 beschreibt die Herstellung eines PUR-Schaum-Textil-Verbundes nach Auftrag eines Reaktivgemisches aus Isocyanat, Polyol und Wasser und nachfolgende Verschäumung durch Temperatu-

EP 0 295 677 A2

reinwirkung, wobei die Textilfläche durch Vinyl- oder Polyurethanpolymere oder durch Silikon-Copolymere verfestigt oder präpariert sein kann.

In EP-B-111 132 wird die Herstellung von Kunstleder oder Kunstledergrundmaterial aus Polyurethan-Präpolymeren auf der Basis von Polyestern und Polyethern auf textilen Bahnen mit Additiven aus anorganischen und organischen Substraten durch Reaktion mit Wasser oder Wasserdampf ohne Gelbildungsbeschleuniger aus katalysatorfreien PUR-Reaktivgemischen beschrieben. Das führt zu unvertretbar langen Reaktionszeiten und zu groben Schaumstrukturen.

Alle vorstehend beschriebenen bekannten technischen Lösungen führen zu keinem Verfahren, das bei vertretbarer Wirtschaftlichkeit und Produktivität ohne nennenswerten Aufwand für den Umweltschutz in großtechnischem Umfang zu einer sehr guten Erzeugnisqualität führt.

Durch die Erfindung werden diese Nachteile beseitigt. Sie löst die Aufgabe, ein Verfahren für die lösungsmittelfreie Herstellung poröser Polyurethanstrukturen und Verbunde mit Fasern, Fasergibilden und anderen Substraten zur Verfügung zu stellen, wobei die genannten Strukturen eine große aktive Oberfläche und einen hohen Anteil an Mikroporen aufweisen sollen.

Die Aufgabe wird anspruchsgemäß gelöst.

Vorteilhafte Ausführungsformen sind Gegenstand der abhängigen Ansprüche.

Gemäß der Erfindung werden durch reaktive Umsetzung eines Systems aus Isocyanat und Polyolen mit Wasser, Wasserdampf oder Feuchtluft-Aerosol-Gemischen harnstoffhaltige fein-und mikroporöse Polyurethanstrukturen mit stark zerklüfteten Zellwänden auf Substraten oder eigenständig gebildet.

Erfindungsgemäß werden poröse Polyurethanstrukturen mit hohem Anteil an Mikroporen im Größenbereich von 0,05 bis 10 $\mu$m und vorzugsweise 0,1 bis 3 $\mu$m dadurch erhalten, daß durch ein System von Katalysatoren zur Polymerbildung im Reaktionsgemisch im Zusammenwirken mit Gelbildungsbeschleunigern im Verfestigungsmedium (flüssiges oder dampfförmiges Wasser) im Temperaturbereich von 4 bis 99 $^{\circ}$C und vorzugsweise 55 bis 90 $^{\circ}$C bei Wasser und von 20 bis 150 $^{\circ}$C und 70 bis 120 $^{\circ}$C bei Wasserdampf eine schockartige Primärverfestigung des vernetzenden PUR-Systems hervorgerufen wird, welche die entstehenden Mikroporen fixiert.

In einer zweiten Reaktionsphase entstehen in den vorverfestigten Zellwänden der Faserüberzüge und des Primärschaumes durch Reaktion von 30 bis 50 % der NCO-Gruppen des Ausgangsgemisches weitere Mikroporen bei gleichzeitiger Ausbildung von stark zerklüfteten Oberflächenstrukturen, vorzugsweise an dünnen Substratüberzügen.

Besonders geeignet für eine derartige Verfahrensführung sind folgende Isocyanatkomponenten:

Toluylendiisocyanat, Xylylendiisocyanat, Hexamethylendiisocyanat, Isophorondiisocyanat, 4,4'-Dicyclohexylmethandiisocyanat und 4,4'-Diphenylmethandiisocyanat sowie deren Gemische und deren Reaktionsprodukte mit niedermolekularen zweiwertigen Alkoholen und/oder Polyalkoholen.

Bevorzugte Polyolkomponenten sind z.B. Polyether aus Propylenglykol. Als Polymerbildungskatalysatoren eignen sich besonders tertiäre Amine, wie z.B. Diazabicyclooctan [2.2.2], oder deren Salze, wie z.B. Triethylendiaminformiat. Als wirksame Gelbildungsbeschleuniger können wasserlösliche polyfunktionelle Alkohole, wie Glycerin, oder sekundäre Amine, wie Hydrazin, eingesetzt werden.

Das reaktive Gemisch aus einem Isocyanat mit einer Funktionalität von vorzugsweise 2 bis 3 und einem Polyol mit einer Funktionalität von 2 bis 3 wird erfindungsgemäß zu einem isocynathaltigen lagerstabilen Zwischenprodukt verarbeitet und vor dem Auftrag auf substratbildende Trägermaterialien aus Fasern oder indifferente Träger mit einem Polyolgemisch einer mittleren Molmasse von 62 bis 3000 und einer Funktionalität von 1,7 bis 2, im Gemisch mit aminischen Vernetzungskatalysatoren in Massenanteilen von 0,2 bis 2 %, zu einer homogenen Mischung vereinigt. Bei der Reaktion der erfindungsgemäßen Reaktionsmischung mit dem Verfestigungsmedium Wasser verschiedener Aggregatzustände, dem Gelbildungsbeschleuniger mit einem Massenanteil von 0,01 bis 5 % zugesetzt sind, werden die - schockartige Primärverfestigung und die Ausbildung von hohen Anteilen von Mikroporen hervorgerufen. Nach Entwässerung der entstehen den poromeren Polyurethanstrukturen und/oder ihrer Verbunde mit Fasern oder Fasergibilden durch Abquetschen und Trocknen werden Erzeugnisse hoher Festigkeit und Hydrolysebeständigkeit mit einer Wasserdampfadsorption von über 20 %, bezogen auf die Polyurethanmasse, erreicht.

Die auf diese Weise erhaltenen Produkte werden als Enderzeugnisse eingesetzt oder durch bekannte Methoden der Oberflächenbehandlung, wie beispielsweise Schleifen, Beschichten oder Färben, zu hochwertigen Endprodukten veredelt.

Zusammenfassend kann hervorgehoben werden, daß das erfindungsgemäße Verfahren zur Herstellung der oben beschriebenen Produkte die Vorteile eines geringen Material- und Arbeitszeitaufwandes sowie einer hohen Erzeugnisqualität ohne umweltbelastende Einflüsse in sich vereinigt.

Die Erfindung wird nachstehend anhand von Ausführungsbeispielen näher erläutert.

4

## Beispiel 1

Ein Gemisch aus 8 Masse-Teilen Dipropylenglykol, 65 Masse-Teilen Polypropylenglykol einer mittleren Molmasse von 2000 und 2,8 Masse-Teilen Diazabicyclooctan [2.2.2] wurde mit einem isocyanathalatigen Polyurethan aus 170 Masse-Teilen eines Triols auf Basis Propylenoxid/Ethylenoxid/Glycerin einer mittleren Molmasse von 3500 und 36 Masse-Teilen Toluylendiisocyanat zu einer homogenen Mischung vereinigt und unmittelbar danach mit einer Auflage von 300 g/m² auf ein Polypropylen-Substrat aufgetragen. Durch Eintauchen in Wasser von 65 °C, das unterschiedliche Gelbildungsbeschleuniger in variierter Konzentration ent hielt, erfolgte die Umsetzung des Reaktivgemisches zur Bildung der vorgesehenen Polyurethanstrukturen.

Der NCO-Umsatz in Stoffmengenanteilen in % bei verschiedenen Reaktionszeiten, Gelbildungsbeschleunigern und Konzentrationen wurde wie folgt ermittelt:

| Konzentration (Massenanteilen %) | Gelbidlungsbeschleuniger | Reaktionszeit (min) | NCO-Umsatz (%) |
|---|---|---|---|
| - | ohne | 5 | 88 |
| 0,100 | Glycerin | 5 | 93 |
| 0,150 | Polyvinylalkohol | 5 | 92 |
| 0,064 | Hydrazin | 5 | 98 |
| 0,100 | Hydrazin | 5 | 99 |
| 0,130 | Hydrazin | 5 | 99 |
| 0,100 | Glycerin | 3 | 89 |
| 0,150 | Polyvinylalkohol | 3 | 88 |
| 0,064 | Hydrazin | 3 | 90 |
| 0,100 | Hydrazin | 3 | 96 |
| 0,130 | Hydrazin | 3 | 98 |
| - | ohne | 3 | 83 |
| 0,130 | Glycerin | 2 | 86 |
| 0,150 | Polyvinylalkohol | 2 | 85 |
| 0,064 | Hydrazin | 2 | 83 |
| 0,100 | Hydrazin | 2 | 89 |
| 0,130 | Hydrazin | 2 | 93 |
| - | ohne | 2 | 78 |

## Beispiel 2

206 Masse-Teile eines isocyanathaltigen Polyurethans aus 36 Masse-Teilen Toluylendiisocyanat und 170 Masse-Teilen eines Troils auf Basis Propylenoxid/Ethylenoxid/Glycerin mit einer mittleren Molmasse von 3500 wurden mit einem Gemisch aus 81 Masse-Teilen Polypropylenoxid einer mittleren Molmasse von 2000, 9 Masse-Teilen Dipropylenglykol und 2,7 Masse-Teilen Diazabicyclooctan[2.2.2] zu einer homogenen Mischung verarbeitet und mit 150 g/m² auf ein PolyesterSubstrat aufgetragen. Das beschichtete Substrat wurde in Wasser von 75 °C mit einer Konzentration von 0,05 Masse-% Hydrazin getaucht. Es wurden folgende Umsätze (Stoffmengenanteile) ermittelt:

| Reaktionszeit (min) | Umsatz (%) |
|---|---|
| 1 | 70 |
| 2 | 82 |
| 3 | 90 |
| 4 | 93 |
| 6 | 99 |

Nach 2 min war die Verfestigung des Polymers so weit fortgeschritten, daß auch bei hohen Anpreßdrücken keine Haftrückstände auf metallischen Oberflächen zurückblieben.

## Beispiel 3

Ein Gemisch aus 15 Masse-Teilen Titandioxid (Rutil) mit 81 Masse-Teilen Polypropylenglykol mit einer mittleren Molmasse 2000 und einem Wassergehalt < 0,4 g, 9 Masse-Teilen Dipropylenglykol und 2,8 Masse-Teilen Diazabicyclooctan[2.2.2] wurde so homogenisiert, daß die Teilchengröße des Pigments unter 10 µm lag. Danach wurde dieses homo genisierte Gemisch bis zum Entstehen einer homogenen, - schlierenfreien Mischung mit einem Präpolymer aus 35 Teilen Toluylendiisocyanat und 165 Masse-Teilen eines Triols aus Ethylenoxid/Propylenoxid/Glycerin vermischt. Es folgte der Auftrag des reaktiven Gemisches auf ein Nadelschrumpfvlies von 2 mm Dicke aus 50 % Polyesterfasern, 20 % Viskosefasern vom Baumwolltyp und 30 % Polypropylenfasern als Schrumpfkomponente mit einer Auflage von 220 g/m².
Die Warenbahn wurde unmittelbar danach in ein Reaktionsbad mit einer Konzentration von 0,05 ± 0,01 Masse-% Hydrazin in Wasser von 62 °C kontinuierlich eingeführt. Die Eintauchtiefe der Warenbahn betrug 3,0 m, die Warenbahngeschwindigkeit wurde mit 5 m/min ermittelt. Nach 3,0 m Passage im Reaktionsbad wurde die Warenbahn an der Polymerseite mit einer Stahlwalze umgelenkt, ausgewaschen und getrocknet. Der Betrieb der Anlage wurde über 10 h aufrechterhalten, ohne daß eine Reinigung der Umlenkwalze des Reaktionsbades wegen Polymerverunreinigungen erforderlich wurde. Die Gesamtpassage durch das Reaktionsbad betrug 6,0 m. Die Polymerseite der Warenbahn war nach dem Passieren des Reaktionsbades ohne merkliche Restklebrigkeit. Das resultierende Basismaterial für die verschiedensten Finish-Varianten konnte unmittelbar nach dem Trocknen mit einer rotierenden Schleifwalze durch Flächenschliff behandelt werden, ohne daß Schleifpapier zugesetzt wurde.
Der im Grunderzeugnis enthaltene Polymeranteil hatte eine Wasserdampfaufnahme von 28 %.

## Beispiel 4

7 Masse-Teile feindisperse Kieselsäure wurden bei 60 °C 48 h lang getrocknet und in ein Gemisch von 3,7 Masse-Teilen Diazabicyclooctan[2.2.2], 10 Masse-Teilen Dipropylenglykol und 90 Masse-Teilen Polypropylenglykol einer mittleren Molmasse von 2000 bei 187 mbar (140 Torr) eingerührt. Das erhaltene Gemisch wurde danach mit einem Polyurethan-Präpolymer aus 153 Masse-Teilen eines trifunktionellen Polyols auf Basis Propylenoxid/Ethylenoxid/Glycerin und 34 Teilen Toluylendiisocyanat bei 133 mbar (100 Torr) verrührt.
Die weitere Verarbeitung erfolgte gemäß Beispiel 3. Es wurde ein weiches, kompressibles Material mit sehr guter Formbarkeit erhalten, das nach dem erforderlichen Auftrag einer Deckschicht als Schaftmaterial für Sportschuhe erfolgreich erprobt wurde. Die Wasserdampfaufnahme des Polymeranteils im Basismaterial betrug 15 mg $H_2O/cm^2 \bullet 24$ h.

## Ansprüche

1. Verfahren zur lösungsmittelfreien Herstellung poröser Polyurethanstrukturen und Verbunde mit Fasern, Fasergebilden und anderen Substraten aus flüssigen, reaktiven Polyurethansystemen unter Einsatz von Wasser oder Wasserdampf als Verfestigungsmedium,
**dadurch gekennzeichnet, daß**
durch gezieltes Zusammenwirken von Vernetzungskatalysatoren im Polyurethansystem mit Gelbildungsbe-

6

schleunigern im Verfestigungsmedium (Wasser oder Wasserdampf) in Verbindung mit einer gezielten Temperaturführung unter extrem schnellem Viskositätsanstieg eine schockartige Primärverfestigung des vernetzenden Polyurethansystems hervorgerufen wird, welche die im Entstehaungsstadium zu großen Anteilen gebildeten Mikroporen im Größenbereich von 0,05 bis 10 μm und vorzugsweise 0,1 bis 3 μm fixiert,

und

in einer zweiten Reaktionsphase in den vorverfestigten Zellwänden des Primärschaumes oder Faserüberzuges von 30 bis 50 % der reaktiven NCO-Gruppen des Ausgangsgemisches Mikroporen gebildet werden bei gleichzeitiger Entstehung stark zerklüfteter Oberflächenstrukturen an vorzugsweise harnstoffsegmentierten, dünnen Substratüberzügen.

2. Verfahren nach Anspruch 1, dadurch gekennzeichnet, daß ein Polyurethansystem aus einem Isocyanat einer Funktionalität von 2 bis 3, mindestens einem Polyetheralkohol einer Funktionalität von 2 bis 3 und einer mittleren Molmasse von 1000 bis 5000 sowie einem Polyolgemisch einer mittleren Molmasse von 62 bis 3000 und einer Funktionalität von 1,7 bis 2 eingesetzt wird.

3. Verfahren nach Anspruch 1 oder 2, dadurch gekennzeichnet, daß Dehnungsverhalten und Weichheit der Polyurethanphase und ihrer Substratverbunde durch Variation der mittleren Gesamtfunktionalität des Polyolgemisches innerhalb eines Funktionalitätsbereichs von 2 bis 2,5 und vorzugsweise 2,1 bis 2,3 dem vogesehenen Verwendungszweck des Endproduktes angepaßt werden.

4. Verfahren nach einem der Ansprüche 1 bis 3, dadurch gekennzeichnet, daß als Katalysatoren in der Polymerphase tertiäre Amine, zum Beispiel Diazabicyclooctan [2.2.2] in einem Konzentrationsbereich von 0,2 bis 2,0 % Massenanteilen und vorzugsweise 0,5 bis 1,8 % Massenanteilen eingesetzt werden.

5. Verfahren nach einem der Ansprüche 1 bis 4, dadurch gekennzeichnet, daß als Gelbildungsbeschleuniger mono-oder polyfunktionelle primäre und/oder sekundäre Amine, zum Beispiel Hydrazin, in einem Konzentrationsbereich von 0,01 bis 1,0 % Massenanteilen und vorzugsweise 0,03 bis 0,3 % Massenanteilen, bezogen auf Wasser in flüssiger oder gasförmiger Phase, eingesetzt werden.

4. Verfahren nach einem der Ansprüche 1 bis 4, dadurch gekennzeichnet, daß als Gelbildungsbeschleuniger wasserlösliche mono- oder polyfunktionelle Alkohole, zum Beispiel Polyvinylalkohol oder Glycerin, in einem Konzentrationsbereich von 0,05 bis 5,0 % Massenanteilen und vorzugsweise 0,1 bis 1,0 % Massenanteilen, bezogen auf flüssiges oder gasförmiges Wasser, allein oder im Gemisch mit Gelbildungsbeschleunigern nach Anspruch 5 eingesetzt werden.

7. Verfahren nach einem der Ansprüche 1 bis 6, dadurch gekennzeichnet, daß die Temperatur des flüssigen Verfestigungsmediums aus Wasser und Gelbildungsbeschleunigern im Bereich von 4 bis 99 °C und vorzugsweise 55 bis 90 °C und die Temperatur des Gemischs aus Wasser und Gelbildungsbeschleuniger als dampfförmiges Verfestigungsmedium auf 20 bis 150 °C und vorzugsweise 70 bis 120 °C eingestellt wird.

8. Verfahren nach einem der Ansprüche 1 bis 7, dadurch gekennzeichnet, daß für die Herstellung des flüssigen Polyurethan-Reaktivsystems zwei flüssige lagerstabile Ausgangskomponenten A und B folgender Zusammensetzung hergestellt werden,

- Komponente A

aus Toluylendiisocyanat und einem Triol auf Basis Propylenoxid/Ethylenoxid/Glycerin einer mittleren Molmasse von 3500,

- Komponente B

aus Polypropylenglykol einer mittleren Molmasse von 2000, Dipropylenglykol und Diazabicyclooctan 2.2.2 , die im Massenverhältnis von
Komponente A 65 bis 95 Masse-%
Komponente B 35 bis 5 Masse-%
frühestens 24 h und spätestens unmittelbar vor der Einwirkung des Verfestigungsmediums unter Ausschluß von Luftfeuchtigkeit durch bekannte Mischverfahren, vorzugsweise mit statischen Mischern, zu einer homogen Mischung vereinigt werden.

9. Verfahren nach einem der Ansprüche 1 bis 8, dadurch gekennzeichnet, daß der Komponente B nach Anspruch 8 nichtreaktive farbgebende Substanzen oder andere Additive, zum Beispiel feindisperses $SiO_2$ für die Erhöhung der Sorptionsfähigkeit des Polyurethans, vor der Vereinigung mit der Komponente A zugesetzt werden und der Wassergehalt des erzeugten Gemisches ≤ 0,5 Masse-% beträgt.

10. Verfahren nach einem der Ansprüche 1 bis 9, dadurch gekennzeichnet, daß das katalysatorhaltige flüssige Polyurethan-Reaktivsystem mit einem Aerosol, bestehend aus 98 bis 20 Masse-a% Feuchtluft einer relativen Feuchte von 80 bis 100 %, 1 bis 80 Masse-% Wasser einer Teilchengröße von $10^{-2}$ bis 10 μm und max. 1 Masse-% eines gasförmigen oder flüssigen Gelbildungsbeschleunigers im Temperaturbereich von 10 bis 150 °C und vorzugsweise 60 bis 150 °C zur Reaktion gebracht wird.